# EUROPÄISCHE PATENTSCHRIFT

(11) **EP 2 103 834 B1**
(45) Veröffentlichungstag und Bekanntmachung des Hinweises auf die Patenterteilung: **11.06.2014**
(21) Anmeldenummer: 09004008.0
(22) Anmeldetag: 20.03.2009
(51) Int. Cl.: F16F 9/46

(54) **Dämpfungsventil für einen hydraulischen Schwingungsdämpfer**
Damping valve for a hydraulic vibration damper
Soupape pour un amortisseur hydraulique

(30) Priorität: 20.03.2008 DE 102008015416
(43) Veröffentlichungstag der Anmeldung: 23.09.2009
(73) Patentinhaber: ThyssenKrupp Bilstein GmbH, 58256 Ennepetal (DE)
(72) Erfinder: Schmidt, Klaus, 1519 Odenthal (DE); Hamers, Wolfgang, 52428 Jülich (DE)
(74) Vertreter: Albrecht, Rainer Harald

(56) Entgegenhaltungen:
- EP-A1- 1 538 366
- US-A- 5 735 372

## Beschreibung

Die Erfindung betrifft ein Dämpfungsventil für einen hydraulischen Schwingungsdämpfer mit
einem axial beweglichen Stellschieber, der einen Schaft und einen hohlzylindrischen Ventilkörper aufweist,
einem elektromagnetischen Linearantrieb zur axialen Verstellung des Stellschiebers,
einem ortsfest angeordneten Führungskörper, der als Hohlkörper ausgebildet ist und ein zapfenförmiges Ende aufweist, und
einem ringförmigen Stützkörper zwischen ortsfesten Teilen des Linearantriebs und dem Führungskörper,
wobei der hohlzylindrische Ventilkörper auf dem zapfenförmigen Ende des Führungskörpers geführt ist und mit im Mantel des Führungskörpers angeordneten Ventilöffnungen derart zusammenwirkt, dass der freie Querschnitt der Ventilöffnungen durch eine Axialbewegung des Ventilkörpers veränderbar ist, und wobei der Führungskörper und der Stützkörper einen ringförmigen Strömungsraum begrenzen, in den die Ventilöffnungen des Führungskörpers sowie im Mantel des Stützkörpers angeordnete Durchströmöffnungen münden. Das Dämpfungsventil kann in einem Gehäuse angeordnet werden, das einen Strömungseinlass sowie einen Strömungsauslass aufweist und als sogenanntes "Rucksackventil" an der Außenseite eines hydraulischen Schwingungsdämpfers befestigbar ist. Der Strömungseinlass und -auslass des Gehäuses ist hydraulisch an Fluidräume des Schwingungsdämpfers angeschlossen. Durch Betätigung des Stellschiebers ist die Dämpfungskraft des hydraulischen Schwingungsdämpfers stufenlos veränderbar. Werden einem Schwingungsdämpfer zwei Dämpfungsventile zugeordnet, so ist es möglich, die Dämpfungskräfte in der Zugstufe und der Druckstufe des Schwingungsdämpfers unabhängig voneinander beliebig zu verändern.

Ein Dämpfungsventil mit den eingangs beschriebenen Merkmalen ist aus EP 1 538 366 A1 bekannt. Der Stützkörper umgibt den Stellschieber und ist vom Stellschieber beabstandet angeordnet. Auf diese Weise entsteht zwischen dem Stellschieber und dem Stützkörper ein Ringraum, der bei der zumeist praktizierten Strömungsrichtung auch als Abströmkammer bezeichnet werden kann. In EP 1 538 366 A1 wird beschrieben, dass der Ringraum notwendig ist um die Strömung der Dämpfungsflüssigkeit und damit auch die Dämpfungskraft des Dämpfungsventils gezielt beeinflussen zu können. Durch die Höhe und Breite des ringförmigen Strömungsraums sowie durch die Größe und Anzahl der im Mantel des Stützkörpers angeordneten Durchströmöffnungen kann die Strömung der Dämpfungsflüssigkeit so beeinflusst werden, dass ein Strömungsanteil den ringförmigen Strömungsraum sofort durch die Abströmöffnungen verlässt, während der restliche Strömungsanteil in der Kammer umgelenkt und auf die Stimfläche des Stellschiebers geleitet wird. Es wird ausgeführt, dass der umgelenkte Strömungsanteil im Ringraum zur Kompensation von Störkräften, notwendig. Allgemein gibt die Druckschrift dem Fachmann die zusätzliche Anregung, die Strömungswiderstände im Mantel des Führungskörpers durch die Kontur der Ventilöffnungen zu beeinflussen. Trotz der nach der herrschenden Lehre einzuhaltenden Parameter ist der Dämpfungskraftverlauf bei Verwendung des bekannten Dämpfungsventils noch nicht befriedigend. Das betrifft sowohl die strömungsabhängigen Dämpfungskraftverläufe als auch die Wiederholgenauigkeit.

Der Erfindung liegt die Aufgabe zugrunde, das Dämpfungskraftverhalten des Dämpfungsventils zu verbessern.

Ausgehend von einem Dämpfungsventil mit den eingangs beschriebenen Merkmalen wird die Aufgabe erfindungsgemäß dadurch gelöst, dass die Ventilöffnungen des Führungskörpers eine herzförmige Kontur aufweisen, die in Schließrichtung des Stellschiebers in einer Spitze ausläuft und ausgehend von der Spitze symmetrisch zu einer durch die Spitze vorgegebenen Symmetrieachse jeweils in einem Bogen in eine flach ansteigenden Berandung einer breiten Öffnung übergeht und dass die Durchströmöffnungen jeweils auf die Symmetrieachse einer Ventilöffnung des Führungskörpers gerichtet sind. Die Erfindung beruht auf der überraschenden Erkenntnis, dass eine Strömungsumlenkung in dem ringförmigen Strömungsraum zwischen dem Führungskörper und dem Stützkörper zu vermeiden ist und ein besseres Strömungsverhalten des Dämpfungsventils realisiert werden kann, wenn die Ventilöffnungen sowie die den Ventilöffnungen zugeordneten Durchströmöffnungen des Stützkörpers fluchten und wenn das Dämpfungsfluid ohne jede Umlenkung den ringförmigen Strömungsraum im Wesentlichen radial durchströmt. Es erweist sich als günstig, wenn entgegen der herrschenden Lehrmeinung der Strömungsdruckverlust im Wesentlichen nur an der Berandung der Ventilöffnungen auftritt und Druckverluste, die bei der Durchströmung des ringförmigen Raumes sowie bei der Abströmung durch die Durchströmöffnungen auftreten, demgegenüber vernachlässigbar klein sind, und zwar in jeder Funktionsstellung des Stellschiebers. Die Durchströmöffnungen in dem ringförmigen Stützkörper sind vorzugsweise als Bohrungen ausgebildet.

Der Schaft des Stellschiebers weist in an sich bekannter Weise zweckmäßig mindestens eine Druckausgleichsbohrung auf, welche den Fluidraum innerhalb des hohlzylindrischen Ventilkörpers mit einem Fluidraum an der rückseitigen Stimfläche des Schaftes hydraulisch verbindet. Erfindungsgemäß ist in der Zylinderwand des Ventilkörpers eine Öffnung angeordnet, welche in jeder Funktionsstellung des Stellschiebers den Fluidraum innerhalb des Ventilkörpers mit dem ringförmigen Strömungsraum zwischen dem Stützkörper und dem Ventilkörper hydraulisch verbindet. Damit der Ventilkörper ungeachtet der die Ventilöffnungen durchströmenden Dämpfungsfluid mit geringer Kraft präzisionsgenau verstellt werden kann, erweist es sich als vorteilhaft, wenn die Wandstärke des Ventilkörpers sich zur Stimfläche des Ventilkörpers hin unter Ausbildung einer stirnseitigen Dichtfläche verjüngt. Die Dichtfläche kann als beispielsweise 0,1 mm breite ebene Ringfläche ausgebildet sein.

Eine weitere vorteilhafte Ausgestaltung des erfindungsgemäßen Dämpfungsventils sieht vor, dass in den Führungskörper ein passives Dämpfungselement eingesetzt ist, welches nur in einer Richtung durchströmbar ist. Das passive Dämpfungselement kann an einem mit Einströmöffnungen versehenen Deckel befestigt werden, der an dem Führungsköper befestigbar ist.

Die Ausgestaltung der Lagerung und Führung des axial beweglichen Stellschiebers wirkt sich ebenfalls auf die Genauigkeit aus, mit der der Stellschieber unter gleichen Bedingungen wiederholt verstellt und positioniert werden kann. Eine in dieser Hinsicht vorteilhafte Ausführung der Erfindung sieht vor, dass der Stützkörper an Passflächen des Führungskörpers spielfrei fixiert ist und an seinem von der Fixierungsstelle abgewandten Ende einen zylindrischen Fortsatz aufweist, der den Schaft umgibt und sich bis in den Bereich des Linearantriebs erstreckt, wobei an dem zylindrischen Fortsatz eine ringförmige Lagerstelle angeordnet ist, die den Schaft mit einem geringen Spiel, welches axiale Gleitbewegungen des Stellventils zulässt, umgibt. Die Lagerstelle und der in der Lagerstelle gleitbeweglich geführte Schaft sind vorzugsweise mit einer engen Spielpassung ausgeführt, während für die Fixierung des ringförmigen Stützkörpers an dem Führungskörper eine Übergangs- oder Presspassung vorteilhaft ist.

Im Folgenden wird die Erfindung anhand von Ausführungsbeispielen erläutert. Es zeigen schematisch:
- **Fig. 1**: einen Längsschnitt durch ein Dämpfungsventil für einen hydraulischen Schwingungsdämpfer,
- **Fig. 2**: die Form der in einem ringförmigen Stützkörper vorgesehenen Durchströmöffnungen in einer gegenüber der Fig. 1 stark vergrößerten, perspektivischen Darstellung,
- **Fig.3**: eine Anordnung mit zwei Dämpfungsventilen, die in einem gemeinsamen Gehäuse angeordnet sind und eingesetzt werden kann, um die Dämpfungskräfte in der Zugstufe und der Druckstufe eines Schwingungsdämpfers unabhängig voneinander zu verändern.

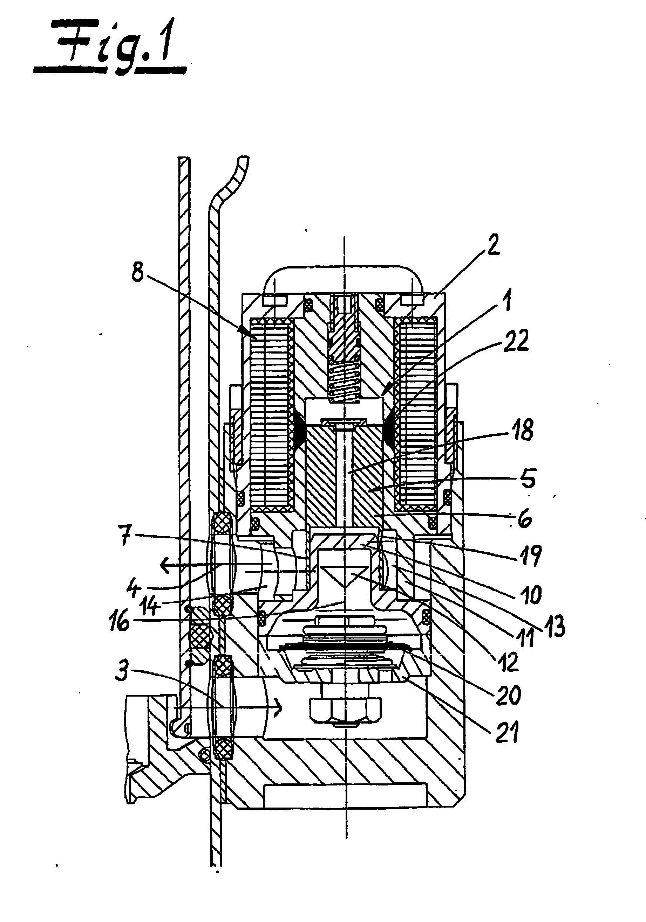

Das in Fig. 1 dargestellte Dämpfungsventil 1 ist in einem Gehäuse 2 angeordnet, welches eine Einlassöffnung 3 sowie eine Auslassöffnung 4 zum Anschluss an einen hydraulischen Schwingungsdämpfer aufweist. Die Gestaltung des Gehäuses ist beliebig.

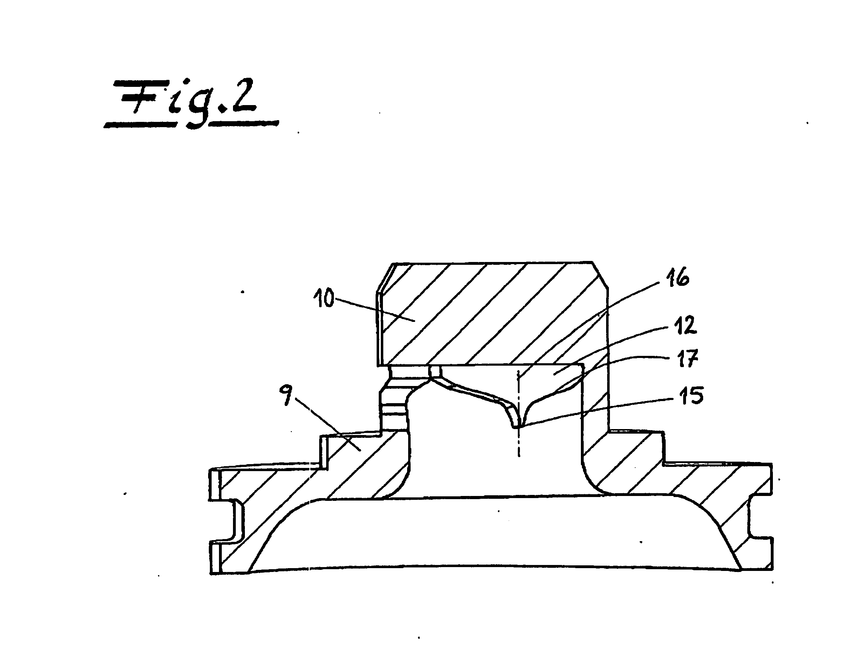

Zum grundsätzlichen Aufbau des in Fig. 1 dargestellten Dämpfungsventils 1 gehören ein axial beweglicher Stellschieber 5, der vorzugsweise einteilig ausgebildet ist und einen Schaft 6 sowie einen hohlzylindrischen Ventilkörper 7 aufweist, ein elektromagnetischer Linearantrieb 8 zur axialen Verstellung des Stellschiebers 5, ein ortsfest angeordneter Führungskörper 9, der als Hohlkörper ausgebildet ist und ein zapfenförmiges Ende 10 aufweist, sowie ein ringförmiger Stützkörper 11 zwischen ortsfesten Teilen des Linearantriebs 8 und dem Führungskörper 9. Der hohlzylindrische Ventilkörper ist auf dem zapfenförmigen Ende 10 des Führungskörpers 9 geführt und wirkt mit im Mantel des Führungskörpers 9 angeordneten Ventilöffnungen 12 dergestalt zusammen, dass der freie Querschnitt der Ventilöffnungen 12 durch eine Axialbewegung des Stellschiebers 5 veränderbar ist. Der Führungskörper 9 und der ihn umgebende Stützkörper 11 begrenzen einen ringförmigen Strömungsraum 13, in den die Ventilöffnungen 12 des Führungskörpers 9 sowie im Mantel des Stützkörpers 11 angeordnete Durchströmöffnungen 14 münden. Aus einer vergleichenden Betrachtung der Fig. 1 und 2 wird deutlich, dass die Ventilöffnungen 12 des Führungskörpers 9 eine herzförmige Kontur aufweisen, die in Schließrichtung des Stellschiebers in einer Spitze 15 ausläuft und ausgehend von der Spitze 15 symmetrisch zu einer durch die Spitze 15 vorgegebenen Symmetrieachse 16 jeweils in einem Bogen in eine flach ansteigende Berandung 17 einer breiten Öffnung übergeht. Die flach ansteigende Berandung 17 kann linear oder bogenförmig gekrümmt sein. Erfindungswesentlich ist ferner, dass die Durchströmöffnungen 14 jeweils auf die Symmetrieachse 16 einer Ventilöffnung 12 des Führungskörpers 9 gerichtet sind.

Der Strömungsquerschnitt der Durchströmöffnungen 14 ist zweckmäßig größer als der freie Querschnitt der jeweils zugeordneten Ventilöffnungen 12. Ferner entnimmt den Darstellungen, dass die Durchströmöffnungen 14 als Bohrungen ausgebildet sind.

Der Schaft 6 des Stellschiebers 5 weist mindestens eine Druckausgleichsbohrung 18 auf, welche den Fluidraum innerhalb des hohlzylindrischen Ventilkörpers 7 mit einem Fluidraum an der rückseitigen Stirnfläche des Schaftes 6 hydraulisch verbindet. In der Zylinderwand des Ventilkörpers 7 ist mindestens eine Öffnung 19 angeordnet, weiche in jeder Funktionsstellung des Stellschiebers 5 den Fluidraum innerhalb des Ventilkörpers 7 mit den ringförmigen Strömungsraum 13 zwischen dem Stützkörper und dem Führungskörper hydraulisch verbindet. Zweckmäßig verjüngt sich die Wandstärke des Ventilkörpers zur Stirnfläche des Ventilkörpers hin unter Ausbildung einer stirnseitigen Dichtfläche. Die Dichtfläche ist vorzugsweise eine ebene Ringfläche, die eine Breite von beispielsweise 0,1 mm aufweisen kann.

In den Führungskörper 9 ist im Ausführungsbeispiel ein passives Dämpfungselement 20 eingesetzt, welches nur in einer Richtung durchströmbar ist. Üblicherweise erfolgt zunächst die Durchströmung des passiven Dämpfungselementes 20 und anschließend die Durchströmung der im Führungskörper 9 sowie im Stützkörper 11 vorgesehenen Öffnungen. Eine andere Strömungsrichtung soll jedoch nicht ausgeschlossen sein. Das Dämpfungselement 20 ist an einem mit Einströmöffnungen versehenen Deckel 21 angeordnet, der an dem Führungskörper 9 befestigbar ist.

Der Stützkörper 11 ist im Ausführungsbeispiel an Passflächen des Führungskörpers 9 spielfrei fixiert und weist an seinem von der Fixierungsstelle abgewandten Ende einen zylindrischen Fortsatz auf, der den Schaft 6 des Stellschiebers umgibt und sich bis in den Bereich des Linearantriebs 8 erstreckt. An dem zylindrischen Fortsatz ist eine ringförmige Lagerstelle 22 angeordnet, die den Schaft 6 mit einem geringen Spiel, welches axiale Gleitbewegungen des Stellventils zulässt, umgibt.

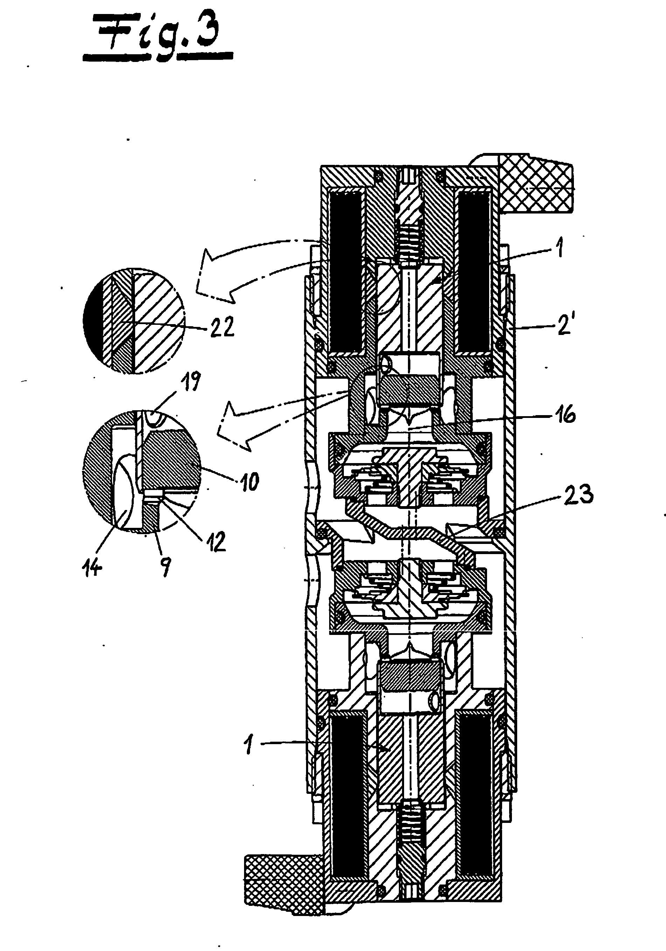

In dem in Fig. 3 dargestellten Ausführungsbeispiel sind in einem gemeinsamen Gehäuse 2', das eine Einlassöffnung 3 sowie eine Auslassöffnung 4 aufweist, zwei erfindungsgemäß ausgebildet Dämpfungsventile 1 angeordnet. Innerhalb des Gehäuses 2' ist ein Strömungsführungselement 23 vorgesehen, welches zwei Hydraulikräume des Gehäuses derart voneinander trennt, dass die in den ersten Hydraulikraum bei einer Einfahrbewegung der Kolbenstange einströmende Dämpfungsflüssigkeit dem ersten Dämpfungsventil in Ventildurchströmungsrichtung zugeleitet wird und die bei einer Ausfahrbewegung der Kolbenstange in dem zweiten Hydraulikraum einströmende Dämpfungsflüssigkeit dem zweiten Dämpfungsventil in Ventildurchströmungsrichtung zugeleitet wird.

## Patentansprüche

1. Dämpfungsventil für einen hydraulischen Schwingungsdämpfer mit
einem axial beweglichen Stellschieber (5), der einen Schaft (6) und einen hohlzylindrischen Ventilkörper (7) aufweist,
einem elektromagnetischen Linearantrieb (8) zur axialen Verstellung des Stellschiebers (5),
einem ortsfest angeordneten Führungskörper (9), der als Hohlkörper ausgebildet ist und ein zapfenförmiges Ende (10) aufweist, und
einem ringförmigen Stützkörper (11) zwischen ortsfesten Teilen des Linearantriebs (8) und dem Führungskörper (9),
wobei der hohlzylindrische Ventilkörper auf dem zapfenförmigen Ende des Führungskörpers geführt ist und mit im Mantel des Führungskörpers (9) angeordneten Ventilöffnungen (12) derart zusammenwirkt, dass der freie Querschnitt der Ventilöffnungen (12) durch eine Axialbewegung des Stellschiebers (5) veränderbar ist, und wobei der Führungskörper (9) und der Stützkörper (11) einen ringförmigen Strömungsraum begrenzen, in den die Ventilöffnungen des Führungskörpers sowie im Mantel des Stützkörpers angeordnete Durchströmöffnungen münden, **dadurch gekennzeichnet, dass** die Ventilöffnungen (12) des Führungskörpers (9) eine herzförmige Kontur aufweisen, die in Schließrichtung des Stellschiebers in einer Spitze (15) ausläuft und ausgehend von der Spitze (15) symmetrisch zu einer durch die Spitze vorgegebenen Symmetrieachse (16) jeweils in einem Bogen in eine flach ansteigende Berandung (17) einer breiten Öffnung übergeht, und dass die Durchström-Öffnungen (14) jeweils auf die Symmetrieachse (16) einer Ventilöffnung des Ventilkörpers gerichtet sind.

2. Dämpfungsventil nach Anspruch 1, **dadurch gekennzeichnet, dass** der Strömungsquerschnitt der Durchströmöffnungen (14) größer ist als der freie Querschnitt der jeweils zugeordneten Ventilöffnungen (12).

3. Dämpfungsventil nach Anspruch 1 oder 2, **dadurch gekennzeichnet, dass** die Durchströmöffnungen (14) als Bohrungen ausgebildet sind.

4. Dämpfungsventil nach einem der Ansprüche 1 bis 3, **dadurch gekennzeichnet, dass** der Schaft (6) des Stellschlebers (5) mindestens eine Druckausgleichsbohrung (18) aufweist welche den Fluidraum innerhalb des hohlzylindrischen Ventilkörpers (7) mit einem Fluidraum an der rückseitigen Stirnfläche des Schaftes hydraulisch verbindet, und dass in der Zylinderwand des Ventilkörpers (7) mindestens eine Öffnung (19) angeordnet ist, welche in jeder Funktionsstellung des Stellschiebers (5) den Fluidraum innerhalb des Ventilkörpers (7) mit dem ringförmigen Strömungsraum (13) zwischen dem Führungskörper und dem Stützkörper hydraulisch verbindet

5. Dämpfungsventil nach einem der Ansprüche 1 bis 4, **dadurch gekennzeichnet, dass** die Wandstärke des Ventilkörpers (7) sich zur Stirnfläche des Ventilkörpers hin unter Ausbildung einer stirnseitigen Sichtfläche verjüngt.

6. Dämpfungsventil nach einem der Ansprüche 1 bis 5, **dadurch gekennzeichnet, dass** in den Führungskörper (9) ein passives Dämpfungselement (20) eingesetzt ist, welches nur in einer Richtung durchströmbar ist

7. Dämpfungsventil nach Anspruch 6, **dadurch gekennzeichnet, dass** das passive Dämpfungselement (20) an einem mit Einströmöffnungen versehenen Deckel (21) angeordnet ist, der an dem Führungskörper (9) befestigbar ist.

8. Dämpfungsventil nach einem der Ansprüche 1 bis 7, **dadurch gekennzeichnet, dass** der Stützkörper (11) an Passflächen des Führungskörpers (9) spielfrei fixiert ist und an seinem von der Fixierungsstelle abgewandeten Ende einen zylindrischen Fortsatz aufweist, der den Schaft (6) umgibt und sich bis in den Bereich des Linearantriebs (8) erstreckt, wobei an dem zylindrischen Fortsatz eine ringförmige Lagerstelle (22) angeordnet ist, die den Schaft (6) mit einem geringen Spiel, welches axiale Gleitbewegungen des Stellschiebers (5) zulässt, umgibt.

## Claims

1. A damping valve for a hydraulic vibration damper with
an axially mobile actuating slide valve (5), which comprises a shank (6) and a hollow-cylindrical valve body (7),
an electromagnetic linear drive (8) for the axial adjustment of the actuating slide valve (5),
a fixedly disposed guide body (9), which is constituted as a hollow body and comprises a peg-shaped end (10), and
an annular support body (11) between fixed parts of the linear drive (8) and the guide body (9),
wherein the hollow-cylindrical valve body is guided on the peg-shaped end of the guide body and cooperates with valve openings (12) disposed in the lateral surface of the guide body (9), in such a way that the free cross-section of the valve openings (12) can be varied by an axial movement of the actuating slide valve (5), and wherein the guide body (9) and the support body (11) bound an annular flow space, into which the valve openings of the guide body and through-flow openings disposed in the lateral surface of the support body emerge, **characterised in that** the valve openings (12) of the guide body (9) have a heart-shaped contour, which terminates in a tip (15) in the closing direction of the actuating slide valve and proceeding from the tip (15) transforms, in each case in an arc symmetrical to an axis of symmetry (16) prescribed by the tip, into a gently rising boundary (17) of a wide opening, and that the through-flow openings (14) are each directed towards the axis of symmetry (16) of a valve opening of the valve body.

2. The damping valve according to claim 1, **characterised in that** the flow cross-section of the through-flow openings (14) is larger than the free cross-section of the respectively assigned valve openings (12).

3. The damping valve according to claim 1 or 2, **characterised in that** the through-flow openings (14) are constituted as bores.

4. The damping valve according to any one of claims 1 to 3, **characterised in that** the shank (6) of the actuating slide valve (5) comprises at least one pressure compensation bore (18), which hydraulically connects the fluid space inside the hollow-cylindrical valve body (7) to a fluid space at the rear-side end face of the shank, and that at least one opening (19) is disposed in the cylinder wall of the valve body (7), said opening hydraulically connecting, in each functional position of the actuating slide valve (5), the fluid space inside the valve body (7) to the annular flow space (13) between the guide body and the support body.

5. The damping valve according to any one of claims 1 to 4, **characterised in that** the wall thickness of the valve body (7) tapers towards the end face of the valve body thereby forming an end-face sealing surface.

6. The damping valve according to any one of claims 1 to 5, **characterised in that** a passive damping element (20), through which a flow can take place only in one direction, is inserted into the guide body (9).

7. The damping valve according to claim 6, **characterised in that** the passive damping element (20) is disposed on a cover (21) provided with inflow openings, said cover being able to be fastened to the guide body (9).

8. The damping valve according to any one of claims 1 to 7, **characterised in that** the support body (11) is fixed without clearance to mating surfaces of the guide body (9) and comprises a cylindrical extension at its end facing away from the fixing point, said extension surrounding the shank (6) and extending into the region of the linear drive (8), wherein an annular bearing point (22) is disposed on the cylindrical extension, said bearing point surrounding the shank (6) with a small clearance which permits axial sliding movements of the actuating slide valve (5).

## Revendications

1. Soupape d'amortissement pour un amortisseur de vibrations hydraulique avec
un tiroir de réglage (5) mobile qui comporte une tige (6) et un corps de soupape cylindrique creux (7)
une commande linéaire électromagnétique (8) pour le réglage axial du tiroir de réglage (5),
un corps de guidage (9) monté fixe qui est constitué comme corps creux et présente une extrémité (10) en forme de tourillon et
un corps de support (11) de forme annulaire entre les parties fixes de la commande linéaire (8) et le corps de guidage (9),
pour laquelle le corps de soupape cylindrique creux est guidé sur l'extrémité en forme de tourillon du corps de guidage et coopère avec les orifices de soupape (12) disposés dans l'enveloppe du corps de guidage (9) de telle sorte que la section libre des orifices de soupape (12) peut être modifiée par un mouvement axial du tiroir de réglage (5) et pour laquelle le corps de guidage (9)et le corps de support (11) délimitent un espace d'écoulement de forme annulaire dans lequel débouchent les orifices de soupape du corps de guidage ainsi que les orifices d'écoulement disposés dans l'enveloppe du corps de support **caractérisée en ce que** les orifices de soupape (12) du corps de guidage (9) présentent un contour en forme de coeur qui se termine en une pointe (15) dans le sens de fermeture du tiroir de réglage et passe en partant de la pointe (15) symétriquement à un axe de symétrie (16) préalablement défini par la pointe à chaque fois dans un arc dans une bordure (17) s'élevant à plat d'un orifice large et **en ce que** les orifices de passage (14) sont à chaque fois orientés sur l'axe de symétrie (16) d'un orifice de soupape du corps de soupape.

2. Soupape d'amortissement selon la revendication 1 **caractérisée en ce que** la section d'écoulement des orifices de passage (14) est plus grande que la section libre des orifices de soupape (12) respectivement attribués.

3. Soupape d'amortissement selon la revendication 1 ou 2 **caractérisée en ce que** les orifices de passage (14) sont constitués comme des trous.

4. Soupape d'amortissement selon une quelconque des revendications 1 à 3 **caractérisée en ce que** la tige (6) du tiroir de réglage (5) présente au moins un alésage de compensation de pression (18) qui relie hydrauliquement le compartiment de fluide à l'intérieur du corps de soupape (7) cylindrique creux à un compartiment de fluide sur la face arrière de la tige et **en ce que** dans la paroi cylindrique du corps de soupape (7) est disposé au moins un orifice (19) lequel relie hydrauliquement dans chaque position de fonctionnement du tiroir de réglage (5), le compartiment de fluide à l'intérieur du corps de soupape (7) à l'espace un compartiment (13) de forme annulaire entre le corps de guidage et le corps de support.

5. Soupape d'amortissement selon une quelconque des revendications 1 à 4 **caractérisée en ce que** l'épaisseur de paroi du corps de soupape (7) se rétrécit à la face du corps de soupape en formant une surface d'étanchéité frontale.

6. Soupape d'amortissement selon une quelconque des revendications 1 à 5 **caractérisée en ce que** dans le corps de guidage (9) est utilisé un élément d'amortissement (20) passif lequel ne peut être traversé que dans une direction.

7. Soupape d'amortissement selon la revendication 6 **caractérisée en ce que** l'élément d'amortissement (20) passif est disposé sur un chapeau (21) muni d'orifices d'admission qui peut être fixé au corps de guidage (9).

8. Soupape d'amortissement selon une quelconque des revendications 1 à 7 **caractérisée en ce que** le corps de support (11) est fixé sans jeu au surfaces d'ajustage du corps de guidage (9) et présente un prolongement cylindrique opposé au point de fixation qui entoure la tige (6) et s'étend jusque dans la zone de la commande linéaire (8) sur le prolongement cylindrique étant disposé un point d'appui (22) de forme annulaire qui entoure la tige (6) avec un faible jeu qui permet des mouvements de coulissement axiaux du tiroir de réglage (5).
